# FASCICULE DE BREVET EUROPEEN

(11) **EP 1 967 469 B1**
(45) Date de publication et mention de la délivrance du brevet: **30.09.2009**
(21) Numéro de dépôt: 08102264.2
(22) Date de dépôt: 04.03.2008
(51) Int. Cl.: B65G 7/12, A45B 1/00, A45F 3/08

(54) **Dispositif d'aide au portage de charges**
Hilfsvorrichtung zum Tragen von Lasten
Load carrying assistance device

(30) Priorité: 07.03.2007 FR 0701634
(43) Date de publication de la demande: 10.09.2008
(73) Titulaire: Besançon, Michel, 69004 Lyon (FR)
(72) Inventeur: Besançon, Michel, 69004 Lyon (FR)
(74) Mandataire: Jeannet, Olivier

(56) Documents cités:
- EP-A- 1 076 018
- FR-A1- 2 817 717
- US-A- 5 017 080
- US-A- 5 653 468
- US-B1- 6 932 095

## Description

La présente invention concerne un dispositif destiné à faciliter le portage des sacs à dos et, selon le même principe, à faciliter certains types de déplacements à pied.

Le port d'un sac à dos lourd au cours d'activités de loisir ou d'activités professionnelles est pénible. Ces activités se déroulent dans de meilleures conditions pour l'utilisateur lorsqu'il est soulagé d'une partie de la pression exercée sur son corps par le poids du sac qu'il porte, tout en conservant sa mobilité en tout lieu. Ce soulagement est déjà ressenti par l'utilisation du bâton de marche utilisé actuellement ; il est amélioré par le dispositif selon l'invention.

Le document FR 2 817 717, au nom du demandeur, décrit un dispositif d'aide au portage d'un sac endossé par un utilisateur. Il comporte un brancard muni d'une roue dont le déplacement est facilité par un lien relié à un bâton. Le bâton muni du lien procure un effet de traction sur le brancard permettant de vaincre une certaine force d'inertie, principalement en montée, mais se révèle inadapté pour soulager un utilisateur des pressions exercées sur son corps lors du transport de charges.

Il n'existe pas, à ce jour, dispositif destiné à la fois à réaliser un soulagement des pressions exercées sur le corps d'un utilisateur lors du transport de charges pendant un déplacement à pied ainsi qu'une réduction des efforts à réaliser pour transporter lesdites charges.

La présente invention a pour objectif de remédier à cette lacune.

Selon l'invention, le dispositif comprend :
- une tige rigide dont la longueur est supérieure à la taille de l'utilisateur, de telle sorte que, lorsque l'extrémité inférieure de cette tige est appuyée sur le sol, l'extrémité supérieure de la tige se trouve au dessus de la tête de l'utilisateur, cette tige rigide étant destinée à être saisie par une main de l'utilisateur ;
- deux organes de coulissement, dont un est relié à ladite charge et dont l'autre est relié à l'extrémité supérieure de la tige rigide, et
- un lien fixé par l'une de ses extrémités à la tige rigide, et engagé avec possibilité de coulissement au travers des deux organes de coulissement, d'abord dans l'organe de coulissement relié à la charge puis dans l'organe de coulissement relié à la tige rigide, ce lien ayant une longueur suffisante pour que son extrémité opposée à celle reliée à la tige rigide puisse être saisie par la main de l'utilisateur autre que celle ayant saisi la tige rigide.

Lors du portage d'un sac à dos, le dispositif selon l'invention agit à la fois comme un support direct au sol d'une partie du poids du sac, comme un levier agissant contre la résistance au déplacement de la masse du sac, comme un amortisseur du poids du sac lors des mouvements de la marche particulièrement en parcours de descente. A ces effets, se combinent ceux procurés par le bâton de marche habituel.

Lors de certains types de déplacements à pied qui n'incluent pas le port d'un sac, l'utilisation du dispositif associé à un harnais, fait intervenir les fonctions précédemment évoquées.

De préférence, les organes de coulissement sont des poulies.

Le dispositif peut comprendre un brin, de longueur réglable, fixé par une extrémité à la partie haute de la charge nécessitant une assistance au portage et comportant à l'autre extrémité un élément de coulissement engagé sur le lien.

L'élément de coulissement peut être un mousqueton simplifié dont le doigt articulé est remplacé par une pièce tubulaire souple échancrée.

Le dispositif peut comprendre une poignée de saisie bloquée sur la tige rigide par un système de serrage, saisissable par l'utilisateur le bras allongé vers le bas et dont l'emplacement et l'angle par rapport à ladite tige sont réglables.

La poignée de saisie est avantageusement orientée perpendiculairement à la tige rigide et dans le sens contraire de la marche.

Le dispositif peut comprendre un organe de saisie de l'extrémité du lien opposée à l'extrémité de ce lien reliée à la tige rigide. Cet organe peut être une poignée de contrôle comportant :
- un trou laissant passer le lien,
- une tige de guidage et de maintien du lien ;
- une surface de friction destinée à bloquer le lien sur ladite poignée ; et
- un élément d'attache destiné à conserver ladite poignée à proximité de la main lors des arrêts de la marche de l'utilisateur.

Le dispositif peut comprendre une sangle attachée par une extrémité à la partie haute de ladite charge, coulissant par un passant mobile le long de la tige rigide et permettant de passer derrière le dos de l'utilisateur et de se bloquer au niveau de la ceinture de l'utilisateur.

La tige rigide peut être habillée d'un revêtement adapté pour un contact doux de ladite tige avec le bras, l'épaule ou la main de l'utilisateur.

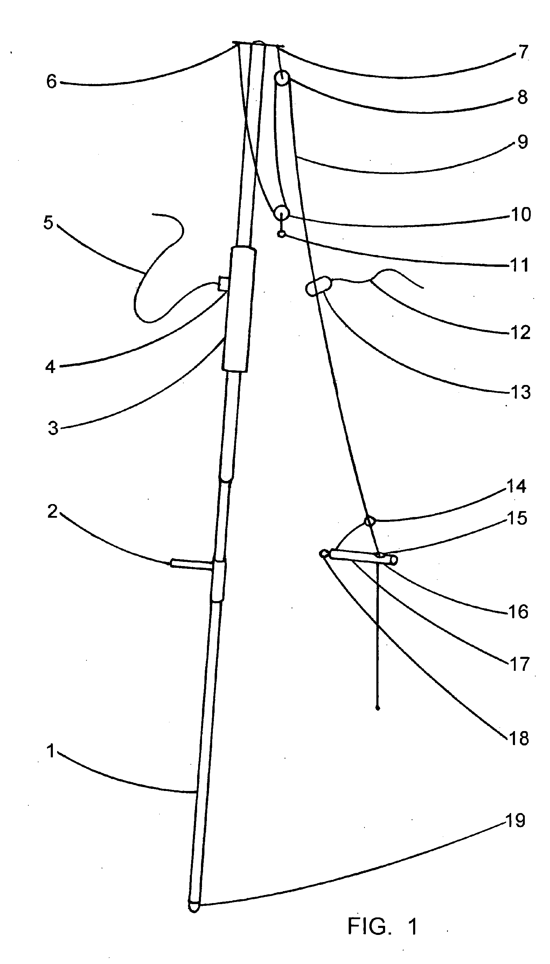

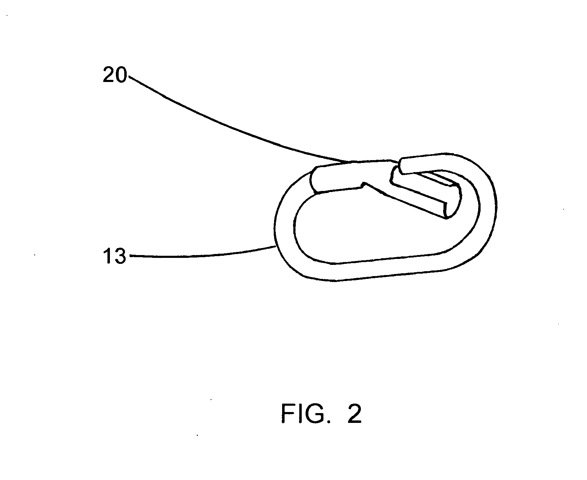

Les dessins annexés illustrent l'invention.
La figure (1) représente le dispositif de l'invention.
La figure (2) représente une pièce du dispositif.

En référence au dessin, le dispositif selon l'invention comprend :
- Un dispositif de tiges dressées (1) qui s'appuie au sol et supporte en partie le poids du sac ou du corps. Ce dispositif peut être composé de tous types de tiges dans toutes configurations ; il est d'une longueur généralement supérieure à la taille de l'utilisateur. L'extrémité supérieure du dispositif comporte deux points d'attache. A l'un de ces points (6) est attachée l'extrémité d'un lien (9), à l'autre point (7) est attachée une bride maintenant une poulie fixe (8). Ces points d'attaches tournent librement autour de l'axe des tiges ; il est souhaitable qu'ils soient amovibles, en étant par exemple fixés sur une tige amovible. Le dispositif est de longueur réglable. Les tiges peuvent être démontées et utilisées comme bâtons de marche tels que connus actuellement.
- Une poignée (2) sur la tige (1) dont l'emplacement et l'angle par rapport à la tige sont réglables, bloquée sur la tige par tout dispositif, orientée généralement perpendiculairement à la tige et dans le sens contraire de la marche, saisissable par l'utilisateur le bras allongé vers le bas.
- Un dispositif de suspension du sac à dos au dispositif de tiges, qui, de plus, contrôle la longueur et la tension de la liaison entre le sac à dos et le dispositif de tiges. Il est constitué par le lien (9) fixé vers l'extrémité supérieure du système de tiges qui s'engage sur une poulie mobile (10) munie d'un système d'attache (11) puis sur la poulie fixe (8). Ce lien s'échappe ensuite vers le bas pour être maintenu par l'utilisateur. Une moufle peut être substituée aux poulies (8) et (10). Un dispositif motorisé peut être substituée aux poulies (8) et (10).
- Un dispositif destiné à fournir un appui à la main le long du lien libre et à minimiser l'effort de serrage de la main sur le lien tout en étant facilement mobile le long du lien. Ce dispositif peut être en particulier une poignée (16) comportant un trou (15) qui laisse passer le lien, une tige (14) de guidage et de maintien du lien et une surface de friction (17) destinée à bloquer le lien sur la poignée lors du serrage par la main. Cette poignée comporte un élément destiné à la conserver à proximité de la main lors des arrêts de la marche de l'utilisateur. Cet élément peut être une boucle (18) qui s'accroche à un crochet de la ceinture du sac. Le dispositif destiné à fournir un appui à la main peut être également un étrier, souple ou rigide ou semi-rigide, facilement mobile et positionnable le long du lien au moyen d'un bloqueur d'alpinisme ou d'un noeud de Machard par exemple. Il est de dimensions adaptées pour être tenu par la main ou le pied.
- Un dispositif (12) destiné à guider le lien (9) au niveau de l'épaule et du bras de l'utilisateur. Ce dispositif peut être un brin (12) de longueur réglable fixé par une extrémité vers le haut du sac et comportant à l'autre extrémité une pièce de coulissement comme un mousqueton simplifié (13) dont le doigt articulé est remplacé par une pièce tubulaire souple échancrée (20).
- Un dispositif destiné à positionner la tige (1) au niveau du bras et de l'épaule de l'utilisateur. Ce dispositif peut être un point d'attache mobile le long de la tige et le long d'un brin dont une extrémité est fixée vers le haut du sac. Une variante de ce dispositif est constituée d'une sangle (5) attachée par une extrémité vers le haut du sac, qui coulisse par un passant (4) mobile le long de la tige, revient derrière le dos de l'utilisateur et se bloque au niveau de la ceinture du sac. Une autre variante est constituée par un brassard qui est relié à un point d'attache mobile le long de la tige.
- Un revêtement adapté pour un contact doux du dispositif avec le bras (3), l'épaule, la main de l'utilisateur.
- Un dispositif d'appui au sol (19), ce peut être un patin, une pointe, une roue ou un train de roues, un ski.

Mise en oeuvre du dispositif :

Le sac à dos est pourvu d'un point de suspension d'une résistance adaptée pour subir les mouvements de traction imprimés au sac à dos par le dispositif selon l'invention. Ce point de suspension est situé suffisamment au-dessus du centre de gravité du sac, c'est par exemple une boucle de suspension renforcée située entre les bretelles du sac ou bien un dispositif apparenté à une poche contentive qui entoure le sac selon sa hauteur.

L'utilisateur porte le sac à dos de la façon habituelle, il le relie au dispositif selon l'invention par le dispositif destiné à cet usage (11). Il prend en main la tige directement ou par une poignée (2). Il positionne la tige au moyen du brin de guidage (5). Il tient de l'autre main le lien souple (9) ou le dispositif d'aide à la préhension (16) ses mains étant situées dans une position assez basse. Il glisse le lien dans le dispositif de guidage (12) et positionne la tige contre son épaule au moyen du dispositif (5). L'utilisateur déplace devant lui l'extrémité inférieure de la tige, il l'appuie sur le sol, continu de marcher tout en poussant de la main du bras et de l'épaule le dispositif dont la partie haute, à laquelle est suspendu le sac, effectue un mouvement vers l'avant, l'utilisateur contrôle la distance et la tension entre le dispositif et le sac par l'intermédiaire du lien souple (9). Une partie du poids du sac est transmise directement au sol par la tige pendant une fraction intéressante de la durée de ce déplacement. Les autres composantes du poids du sac et du corps se répartissent entre la tige, le lien, le corps. Le corps est soulagé partiellement.

Le dispositif peut aussi être utilisé en combinaison avec un harnais. Le dispositif est alors relié au harnais. L'utilisation du dispositif est semblable à celle précédemment décrite.

## Revendications

1. Dispositif d'aide au portage de charges et approprié au soulagement des pressions exercées sur certaines parties du corps dans certains types de déplacement à pieds, comprenant :
- une tige rigide (1) étant destinée à être saisie par une main de l'utilisateur ;
- deux organes de coulissement (10, 8), dont un est relié à ladite charge et dont l'autre est relié à l'extrémité supérieure de la tige rigide (1), et
- un lien (9) fixé par l'une de ses extrémités à la tige rigide (1)
**caractérisé en ce que :**
- la longueur de la tige (1) est supérieure à la taille de l'utilisateur, de telle sorte que, lorsque l'extrémité inférieure de cette tige est appuyée sur le sol, l'extrémité supérieure de la tige se trouve au dessus de la tête de l'utilisateur, et
- le lien (9) est engagé avec possibilité de coulissement au travers des deux organes de coulissement (10, 8), d'abord dans l'organe de coulissement (10) relié à la charge puis dans l'organe de coulissement (8) relié à la tige rigide (1), ce lien (9) ayant une longueur suffisante pour que son extrémité opposée à celle reliée à la tige rigide (1) puisse être saisie par la main de l'utilisateur autre que celle ayant saisi la tige rigide (1).

2. Dispositif selon la revendication 1, **caractérisé en ce que** les organes de coulissement (8, 10) sont des poulies.

3. Dispositif selon la revendication 1 ou la revendication 2, **caractérisé en ce qu'**il comprend un brin (12), de longueur réglable, fixé par une extrémité à la partie haute de la charge nécessitant une assistance au portage et comportant à l'autre extrémité un élément de coulissement (13) engagé sur le lien (9).

4. Dispositif selon la revendication 3, **caractérisé en ce que** l'élément de coulissement (13) est un mousqueton simplifié dont le doigt articulé est remplacé par une pièce tubulaire souple échancrée (20).

5. Dispositif selon l'une des revendications 1 à 4, **caractérisé en ce qu'**il comprend une poignée de saisie (2) bloquée sur la tige rigide (1) par un système de serrage, saisissable par l'utilisateur le bras allongé vers le bas et dont l'emplacement et l'angle par rapport à ladite tige sont réglables.

6. Dispositif selon la revendication 5, **caractérisé en ce que** la poignée de saisie (2) est orientée perpendiculairement à la tige rigide (1) et dans le sens contraire de la marche.

7. Dispositif selon l'une des revendications 1 à 6, **caractérisé en ce qu'**il comprend un organe de saisie de l'extrémité du lien (9) opposée à l'extrémité de ce lien (9) reliée à la tige rigide (1).

8. Dispositif selon la revendication 7, **caractérisé en ce que** l'organe de saisie est une poignée de contrôle (16) comportant :
- un trou (15) laissant passer le lien (9),
- une tige de guidage et de maintien (14) du lien (9) ;
- une surface de friction (17) destinée à bloquer le lien (9) sur ladite poignée ; et
- un élément d'attache (18) destiné à conserver ladite poignée à proximité de la main lors des arrêts de la marche de l'utilisateur.

9. Dispositif selon l'une des revendications 1 à 8, **caractérisé en ce qu'**il comprend une sangle (5) attachée par une extrémité à la partie haute de ladite charge, coulissant par un passant (4) mobile le long de la tige (1) et permettant de passer derrière le dos de l'utilisateur et de se bloquer au niveau de la ceinture de l'utilisateur.

10. Dispositif selon la revendication 7, **caractérisé en ce que** l'organe de saisie est un étrier, souple ou rigide ou semi-rigide, mobile et positionnable le long du lien par exemple au moyen d'un bloqueur d'alpinisme ou d'un noeud de Machard, et étant de dimensions adaptées pour être tenu par la main ou le pied.

## Claims

1. A device for assisting in load bearing and suitable for relieving pressures applied to certain parts of the body in certain types of pedestrian trip, comprising:
- a rigid stick (1) meant to be gripped by one hand of the user;
- two sliding members (10, 8), one of which is connected to said load and the other one of which is connected to the upper end of the rigid stick (1), and
- a strap (9) secured by one of the ends thereof to the rigid stick (1),
**characterized in that:**
- the length of the stick (1) is greater than the height of the user, so that when the lower end of this stick hits the ground, the upper end of the stick is located above the head of the user, and
- the strap (9) is slidingly engaged through both sliding members (10, 8), first in the sliding member (10) connected to the load, then in the sliding member (8) connected to the rigid stick (1), this strap (9) having a length which is sufficient for its end opposite the one connected to the rigid stick (1) to be gripped by the hand of the user other than the one having gripped the rigid stick (1).

2. The device according to claim 1, **characterized in that** the sliding members (8, 10) are pulleys.

3. The device according to claim 1 or claim 2, **characterized in that** it comprises a variable length strand (12) secured by one end to the upper part of the load requiring assistance in bearing and having at the other end a sliding element (13) engaged with the strap (9).

4. The device according to claim 3, **characterized in that** the sliding element (13) is a simplified safety hook, the hinged clip of which is replaced by a cut-out flexible tubular part (20).

5. The device according to any of claims 1 to 4, **characterized in that** it comprises a grip handle (2) locked on the rigid stick (1) by a clamping system, which can be gripped by the user with his/her arm extended downward, and the location and angle of which are adjustable with respect to said stick.

6. The device according to claim 5, **characterized in that** the grip handle (2) is oriented perpendicularly to the rigid stick (1) and in a direction opposite the moving direction.

7. The device according to any of claims 1 to 6, **characterized in that** it comprises a member for gripping the end of the strap (9) opposite the end of this strap (9) connected to the rigid stick (1).

8. The device according to claim 7, **characterized in that** the gripping member is a control handle (16) comprising:
- a hole (15) for the strap (9) to go through,
- a rod for guiding and holding (14) the strap (9);
- a frictional surface (17) meant for locking the strap (9) on said handle; and
- an attaching element (18) meant for keeping said handle close to the hand when the user stops walking.

9. The device according to any of claims 1 to 8, **characterized in that** it comprises a band (5) attached by one end to the upper part of said load, sliding through a mobile carrier (4) along the stick (1), and capable of going behind the user's back and locking at the user's belt.

10. The device according to claim 7, **characterized in that** the gripping member is a flexible or rigid or semi-rigid mobile stirrup piece, which can be positioned along the strap, e.g. by means of a mountaineering ascender or a Machard knot, and having dimensions adapted to be held by a hand or a foot.

## Patentansprüche

1. Hilfsvorrichtung zum Tragen von Lasten und geeignet zum Entlasten von Drücken, die auf bestimmte Körperteile bei bestimmten Arten der gehenden Fortbewegung ausgeübt werden, umfassend:
- einen unbiegsamen Stab (1), der dazu gedacht ist, von einer Hand des Benutzers ergriffen zu werden;
- zwei Gleitorgane (10, 8), von denen eines mit der Last verbunden ist und von denen das andere mit dem oberen Ende des unbiegsamen Stabs (1) verbunden ist, und
- ein Band (9), das an einem seiner Enden an dem unbiegsamen Stab (1) befestigt ist,
**dadurch gekennzeichnet, dass:**
- die Länge des Stabs (1) größer ist als die Größe des Benutzers, so dass, wenn das untere Ende dieses Stabs auf den Boden aufgesetzt wird, das obere Ende des Stabs sich über dem Kopf des Benutzers befindet, und
- das Band (9) durch die beiden Gleitorgane (10, 8) gleitbar in Eingriff steht, zunächst in dem Gleitorgan (10), das mit der Last verbunden ist, dann in dem Gleitorgan (8), das mit dem unbiegsamen Stab (1) verbunden ist, wobei dieses Band (9) eine Länge aufweist, die ausreicht, damit sein Ende gegenüber dem Ende, das mit dem unbiegsamen Stab (1) verbunden ist, von der anderen Hand des Benutzers ergriffen werden kann, die nicht den unbiegsamen Stab (1) ergriffen hat.

2. Vorrichtung nach Anspruch 1, **dadurch gekennzeichnet, dass** die Gleitorgane (8, 10) Seilrollen sind.

3. Vorrichtung nach Anspruch 1 oder 2, **dadurch gekennzeichnet, dass** sie einen Strang (12) einstellbarer Länge umfasst, der an einem Ende an dem oberen Teil der Last befestigt ist, für deren Tragen Hilfe benötigt wird, und der an dem anderen Ende ein Gleitelement (13) aufweist, das mit dem Band (9) in Eingriff steht.

4. Vorrichtung nach Anspruch 3, **dadurch gekennzeichnet, dass** das Gleitelement (13) ein vereinfachter Karabinerhaken ist, dessen gelenkiger Dorn durch ein ausgeschnittenes biegsames röhrenförmiges Teil (20) ersetzt ist.

5. Vorrichtung nach einem der Ansprüche 1 bis 4, **dadurch gekennzeichnet, dass** sie einen Haltegriff (2) umfasst, der an dem unbiegsamen Stab (1) durch ein Klemmsystem festgelegt wird, der von dem Benutzer mit nach unten ausgestrecktem Arm ergriffen werden kann und dessen Position und Winkel im Verhältnis zu dem Stab einstellbar sind.

6. Vorrichtung nach Anspruch 5, **dadurch gekennzeichnet, dass** der Haltegriff (2) senkrecht zu dem unbiegsamen Stab (1) und entgegen der Laufrichtung ausgerichtet ist.

7. Vorrichtung nach einem der Ansprüche 1 bis 6, **dadurch gekennzeichnet, dass** sie ein Organ zum Ergreifen des Bandendes (9) umfasst, das dem Ende dieses Bandes (9) gegenüberliegt, das mit dem unbiegsamen Stab (1) verbunden ist.

8. Vorrichtung nach Anspruch 7, **dadurch gekennzeichnet, dass** das Greiforgan ein Steuergriff (16) ist, umfassend:
- ein Loch (15) für den Durchgang des Bandes (9),
- einen Stab zum Führen und Halten (14) des Bandes (9);
- eine Reibfläche (17), die dazu gedacht ist, das Band (9) an dem Griff festzulegen; und
- ein Befestigungselement (18), das dazu gedacht ist, den Griff in Handnähe zu halten, wenn der Benutzer seinen Gang unterbricht.

9. Vorrichtung nach einem der Ansprüche 1 bis 8, **dadurch gekennzeichnet, dass** sie einen Gurt (5) umfasst, der an einem Ende an dem oberen Teil der Last befestigt ist, durch eine bewegliche Schlaufe (4) an dem Stab (1) entlang gleitet und hinter den Rücken des Benutzers gehen kann und am Gürtel des Benutzers festgelegt werden kann.

10. Vorrichtung nach Anspruch 7, **dadurch gekennzeichnet, dass** das Greiforgan ein biegsamer oder unbiegsamer oder halbbiegsamer beweglicher Bügel ist, der an dem Band entlang angeordnet werden kann, z.B. mittels einer Bergsteigklemme oder eines Kreuzklemmknotens, und der Abmessungen aufweist, die dazu geeignet sind, um von einer Hand oder einem Fuß gehalten zu werden.
